# EUROPEAN PATENT APPLICATION

(11) **EP 1 076 049 A1**
(43) Date of publication of application: **14.02.2001**
(21) Application number: 00202801.7
(22) Date of filing: 08.08.2000
(51) Int. Cl.: C04B 28/14, C04B 24/06, C04B 103/20

(54) **Curing retarder for plaster and the like, a plaster composition making use thereof and a method for producing such a curing retarder**

(30) Priority: 10.08.1999 BE 9900544
(71) Applicant: Sibeco Chemicals, naamloze vennootschap, 2260 Oevel (BE)
(72) Inventor: Meynaerts, Herman, 3202 Rillaar (BE)
(74) Representative: Donné, Eddy

(57) **Abstract**

Curing retarder for plaster and the like, whereby this curing retarder contains tartaric acid as an active component, characterised in that at least 50% of this tartaric acid consists of dried synthetic tartaric acid, whereby said quantity of synthetic tartaric acid has particles having such a size that they have a Gaussian distribution (C1-C2) whose average value (M1-M2) is situated at a particle size (P1-P2) which is smaller than 100 micron.

## Description

The present invention concerns a curing retarder for plaster and the like, a plaster composition making use thereof, as well as a method for producing such a curing retarder.

It is known that plaster compositions on the basis of gypsum are formed by burning calcium sulphate and by adding a number of additives to it. One such additive is a curing retarder. For, if no curing retarder was added, the composition would harden in less than 10 minutes, as a result of which the plaster could not be used in practice.

It is known to make use of natural tartaric acid as a curing retarder. When the plaster is being prepared, after water has been added, such tartaric acid dissolves very well and thus provides for a homogeneous curing effect for the composition as a whole.

A major disadvantage of natural tartaric acid is that it is very expensive, as it is supplied by the wine industry. Especially in good wine years, when there is little sour wine and only a small volume of tartaric acid is available, the prices for such natural tartaric acid are very high.

It is also known to use citric acid instead of natural tartaric acid. Citric acid is disadvantageous however, in that, in order to obtain the same effect as with natural tartaric acid, relatively large amounts are required, so that the total cost price of the plaster composition also rises considerably. Moreover, the plaster composition should have has as little additives as possible in terms of percentage.

People have also tried to use synthetic tartaric acid instead of natural tartaric acid. In practice, however, it turned out that traditionally made synthetic tartaric acid causes many problems when it is used as a curing retarder in the plaster composition, and it can only be used in a reliable manner in a restricted number of applications. The latter is the case for applications in which the plaster composition, after water has been added, is mixed for a longer period of time, so that the mixture has enough time to develop sufficient reactivity, irrespective of the qualities of the tartaric acid used.

However, in the case of spray gypsum, the reaction time is restricted, as such spray gypsum is made in a device from which the plaster is cast directly on the wall. The plaster composition and the water are hereby mixed during a short time span, and consequently this only allows for little reactivity. In the case of the conventional synthetic tartaric acid which has been available until now, this results in an irregular curing, which can cause problems when the applied plastering is further processed.

A similar problem occurs when such plaster is used for making gypsum boards. Hereby, it is very important that one can use parameters through the entire manufacturing process of which one knows with certainty how they will react during the process. If the curing varies from one moment to another, and takes place in different ways in different places, one cannot guarantee a continuous production process, nor a high-grade end product.

The invention aims an improved curing retarder for plaster and the like, which does not have the above-mentioned disadvantages, neither as such, nor while being used.

The curing retarder is in the first place designed for plaster, but it is clear that it is not excluded for such curing retarder to be used in other similar curing masses as well, such as for example fillers on the basis of gypsum, products on the basis of cement, etc.

In order to realise the above-mentioned aim, the invention provides for a curing retarder for plaster and the like, whereby this curing retarder contains tartaric acid as an active component, characterised in that at least 50% of this tartaric acid consists of dried synthetic tartaric acid, whereby this quantity of synthetic tartaric acid has particles whose size is such that they represent a Gaussian distribution of which the average size is a particle size which is smaller than 100 micron.

By making use of dried synthetic tartaric acid, which is moreover micronised to a particle size which corresponds to the above-mentioned characteristics, one obtains on the one hand that the product will not become lumpy as such, since it is dried, whereas on the other hand, the small particle size allows for a good distribution of the product while being used, and also for a quick reaction when it is brought into contact with water. As a result, the product can react particularly fast, and it can also be used in plaster compositions in spray gypsum, as is used for making gypsum plates.

In order to better explain the characteristics of the invention, the following preferred embodiment of such a curing retarder according to the invention is described in detail, as an example only without being limitative in any way, with reference to the sole accompanying drawing which represents the Gaussian curve of said curing retarder.

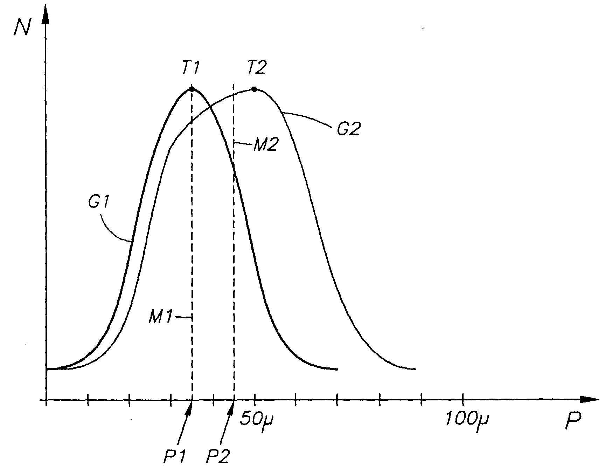

The accompanying figure represents a diagram in which the particle size P is represented in the abscissa, whereas the number of particles N of each particle size concerned is represented in the ordinate.

According to the invention, the curing retarder contains synthetic tartaric acid which is micronised such that a Gaussian curve G1 is obtained whose average size M1 is situated at a particle size P1 which is smaller than 100 micron and which is preferably situated between 30 and 40 micron.

It should be noted that, within the scope of the present invention, by a Gaussian curve is understood every curve which represents the distribution of the particle sizes. Usually, this will be a Gaussian curve having a conventional shape, as is represented by the curve G1, whose top T1 coincides with the average M1. If, however, the distribution is characterised by a non-symmetrical curve, for example G2, it is not the top T2, but the average M2, in particular the accompanying particle size P2, that matters.

It is clear that it is possible to make a combination of micronised synthetic tartaric acid as described above on the one hand, with another form of tartaric acid on the other hand, for example natural tartaric acid or traditional synthetic tartaric acid which has not been micronised to the above-mentioned size. It is clear that such combinations, as of a certain value of micronised tartaric acid, also provide good results. For this reason, it is specified that at least 50% of the tartaric acid consists of synthetic tartaric acid which has been micronised, as mentioned above.

It is clear, however, that according to the most preferred embodiment, the tartaric acid consists for 100% of dried synthetic tartaric acid having the above-mentioned particle size.

In order to restrict the cost price, the tartaric acid can be combined with one or several other components which also have a retarding effect on the curing, be it to a lesser extent. Use can be made to this end of one or several of the following acids: citric acid, fumaric acid, malic acid. According to the invention, these acids can represent 0 to 20% of the total weight of the added acids, including the tartaric acid.

It is not excluded to add other additives to the curing retarder as well, but preferably, in order to guarantee a good reactivity in all the areas of application, at least 80% by weight should consist of tartaric acid.

It is clear that, instead of taking synthetic tartaric acid as a basis, use can also be made of a product which has been derived from a synthetic tartaric acid, which at least partially replaces the above-mentioned synthetic tartaric acid, and which has similar particle sizes.

The invention is particularly appropriate to be used in plaster combinations. Also, it concerns a plaster combination which is characterised in that it is provided with a curing retarder as described above. Preferably, this plaster combination contains less than 1% by weight of the above-mentioned curing retarder.

The invention also concerns a method for producing such a curing retarder. This method at least consists of creating synthetic tartaric acid; of drying this tartaric acid; and of reducing this tartaric acid to a mass consisting of particles having such a size that they represent a Gaussian distribution whereby the top of the Gaussian curve concerned is situated at a particle size which is smaller than 100 micron, better still which is smaller than 50 micron, and which is practically situated at 30 to 40 micron.

According to this method, also other substances can be added to the above-mentioned mass, although preferably with a restriction to maximally 50% by weight of the total. These other substances may consist among others of one or several of the following products: natural tartaric acid, citric acid, fumaric acid, malic acid.

The present invention is by no means limited to the above-described embodiments represented in the accompanying figure; on the contrary, such a curing retarder, such a plaster composition and the method for producing such a curing retarder can be made in all sorts of variants while still remaining within the scope of the invention.

## Claims

1. Curing retarder for plaster and the like, whereby this curing retarder contains tartaric acid as an active component, characterised in that at least 50% of this tartaric acid consists of dried synthetic tartaric acid, whereby said quantity of synthetic tartaric acid has particles having such a size that they have a Gaussian distribution (C1-C2) whose average value (M1-M2) is situated at a particle size (P1-P2) which is smaller than 100 micron.

2. Curing retarder according to claim 1, characterised in that the average value (M1-M2) of the Gaussian curve concerned (C1-C2) is situated at a particle size (P1-P2) which is smaller than 50 micron.

3. Curing retarder according to claim 1, characterised in that the average value (M1) of the Gaussian curve concerned (C1) is situated at a particle size (P1) of about 30 to 40 micron.

4. Curing retarder according to any of the preceding claims, characterised in that the tartaric acid consists for 100% of dried synthetic tartaric acid having the above-mentioned particle size.

5. Curing retarder according to any of the preceding claims, characterised in that the curing retarder contains at least one of the following acids: citric acid, fumaric acid, malic acid.

6. Curing retarder according to claim 5, characterised in that the above-mentioned acid represents 0 to 20% of the total weight of acids and tartaric acid.

7. Curing retarder according to any of the preceding claims, characterised in that at least 80% by weight consists of tartaric acid.

8. Curing retarder according to any of the preceding claims, characterised in that instead of tartaric acid, use can be made of a product which has been derived from a synthetic tartaric acid, which at least partially replaces the above-mentioned tartaric acid, and which has similar particle sizes.

9. Plaster composition, characterised in that it at least consists of a mixture of gypsum and a curing retarder, whereby this curing retarder contains tartaric acid as an active component, of which at least 50% consists of dried synthetic tartaric acid, whereby this quantity of synthetic tartaric acid has particles having such a size that they have a Gaussian distribution whose average value is situated at a particle size which is smaller than 100 micron.

10. Plaster composition according to claim 9, characterised in that the curing retarder further represents one or several of the characteristics as defined in claims 2 to 8.

11. Plaster composition according to claim 9 or 10, characterised in that it contains less than 1% by weight of the above-mentioned curing retarder.

12. Method for producing a curing retarder according to claim 1, characterised in that it at least consists of creating synthetic tartaric acid; of drying this tartaric acid; and of reducing this tartaric acid to a mass consisting of particles having such a size that they represent a Gaussian distribution whereby the average size is situated at a particle size which is smaller than 100 micron.

13. Method according to claim 12, characterised in that the tartaric acid is reduced to a mass consisting of particles having such a size that they represent a Gaussian distribution whose average value is situated at a particle size which is smaller than 50 micron.

14. Method according to claim 13, characterised in that the tartaric acid is reduced to a mass consisting of particles having such a size that they represent a Gaussian distribution whose average value is situated at a particle size of 30 to 40 micron.

15. Method according to claim 14, characterised in that other substances are added to the above-mentioned mass, although with a restriction of maximally 50% by weight of the total.

16. Method according to claim 15, characterised in that the other substances consist of one or several of the following products: tartaric acid, citric acid, fumaric acid, malic acid.
